# EUROPÄISCHE PATENTANMELDUNG

(11) **EP 1 816 719 A2**
(43) Veröffentlichungstag der Anmeldung: **08.08.2007**
(21) Anmeldenummer: 07001089.7
(22) Anmeldetag: 18.01.2007
(51) Int. Cl.: H02G 3/22, F16L 5/00, E03C 1/042

(54) **Abdeck-Rosette**

(30) Priorität: 02.02.2006 DE 202006001617 U
(71) Anmelder: Kessler, Peter, 75236 Kämpfelbach (DE); Kessler, Sven, 75236 Kämpfelbach (DE)
(72) Erfinder: Kessler, Peter, 75236 Kämpfelbach (DE); Kessler, Sven, 75236 Kämpfelbach (DE)
(74) Vertreter: Weiss, Peter

(57) **Zusammenfassung**

Es wird eine Abdeck - Rosette (1) für Durchgänge von Leitungen oder dergleichen vorgeschlagen.

Die Abdeck - Rosette (1) hat mehrere Hohlkammern (3, 4, 5), die von einer Außenwand (6) und der Wand eines Durchgangsloches (2) begrenzt werden. Auf diese Weise ist sie verhältnismäßig schlagfest und sicher vor Beschädigungen. Vorzugsweise ist sie im Spritzguss - Verfahren hergestellt und farbig ausgelegt.

Die Abdeck - Rosette (1) ist bestimmt zum Abdecken von Wand - oder Fußboden - Durchbrüchen. Sie ist für Rohr- und Elektro-Leitungen und Trägerprofile oder ähnliches verwendbar.

## Beschreibung

Die Erfindung bezieht sich auf eine Abdeck - Rosette nach dem Oberbegriff des Hauptanspruches. Eine derartige Abdeck - Rosette ist bekannt.
Derartige bekannte Abdeck - Rosetten werden verwendet zum Abdecken des Übergangs von Leitungen oder dergleichen zu Löchern, durch die sie hindurchgeführt sind. Dabei können die Löcher in Wänden oder Böden vorgesehen sein, die mit Parkett, Laminat, Kork, Teppichböden, Fliesen, Naturstein, Marmor, Granit, PVC, Holz, Tapete, Putz oder ähnlichem bestückt sind. Da solche Löcher meist sehr unschöne Konturen haben, dienen die Abdeckungen insbesondere zum Kaschieren solcher Unregelmäßigkeiten.

Vorzugsweise werden die Abdeck- Rosetten aus Kunststoff oder Blech hergestellt. Zur einfachen Montage werden sie vorzugsweise mindestens zweiteilig ausgeführt, und die beiden Teile werden nach ihrer Platzierung mit einer Riegel- oder Stift- Verbindung oder Verzahnung aneinander befestigt und auf der durchführenden Leitung fixiert.

Die bekannten Abdeck - Rosetten sind durchweg einwandig. Sie sind deshalb leicht zu verformen beziehungsweise sind sie schon nach der Produktion verzogen, und allein der Stoß eines Staubsaugers oder Gegenstands reicht aus, sie zu beschädigen, zu öffnen und 1 oder zu demolieren und / oder zu deplatzieren. Außerdem sind sie oft ästhetisch wenig ansprechend.

Der Erfindung liegt die Aufgabe zugrunde, die aufgezeigten Nachteile zu vermeiden und eine Abdeckrosette zu schaffen, die stabil ist, die fest und wackelfrei sitzt und die ein schönes Aussehen hat.

Diese Aufgabe wird gemäß der Erfindung gelöst durch die kennzeichnenden Merkmale des Hauptanspruches. Vorteilhafte Weiterbildungen des Gegenstandes des Anspruches 1 ergeben sich aus den Merkmalen der Unteransprüche sowie aus der Beschreibung und der Zeichnung.

### Zeichnung

Zwei Ausführungsbeispiele der Erfindung sind in der Zeichnung dargestellt und in der nachfolgenden Beschreibung näher erläutert.

### Es zeigen:

- Figur 1: eine Seitenansicht einer Hälfte einer zweiteiligen Einloch-Rosette,
- Figur 2: eine Draufsicht auf eine Einloch-Rosette,
- Figur 3: eine Seitenansicht einer Hälfte einer zweiteiligen Zweiloch-Rosette
- Figur 4: eine Draufsicht auf eine Zweiloch-Rosette.

### Beschreibung der Ausführungsbeispiele

Eine Abdeck - Rosette 1 ist als Einloch-Rosette ausgebildet. Sie hat ein zentrisches Durchgangsloch 2, das zum Teil als Hohlkammer 3 ausgebildet ist. Zwei weitere Hohlkammern 4 und 5 liegen in einem Bereich zwischen dem Durchgangsloch 2 und einer Außenwand 6 der Abdeck - Rosette 1. Durch den Einbau der drei Hohlkammem 3, 4 und 5 ist eine Doppelwandigkeit der Rosette 1 gegeben, die eine besondere Festigkeit und Stabilität der Bauart gewährleistet. In der einen Kammer 4 der beiden Hohlkammern 4 und 5 ist ein Fixierloch 7 mit einer eigenen Lochwand vorgesehen, und in der anderen Kammer 5 der beiden Hohlkammern 4 und 5 ist ein Zapfen 8 an das Innere der Außenwand 6 angeformt.

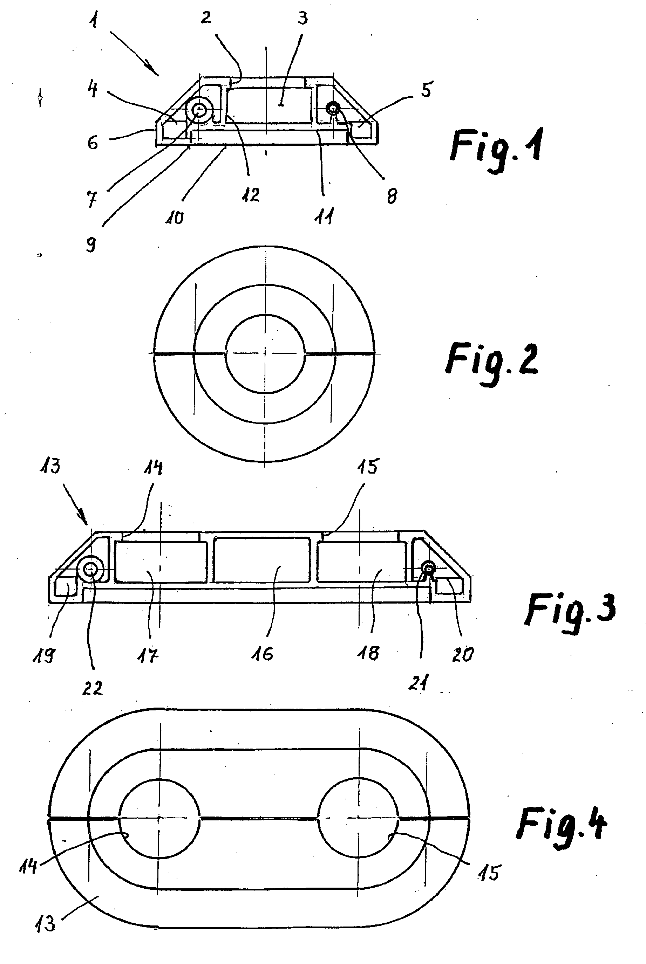

Die Figur 1 zeigt nur eine Hälfte der Abdeckrosette 1, die andere Hälfte ist in Draufsicht in der Figur 2 zu erkennen. Die drei Hohlkammern 3, 4 und 5 werden erst nach der Montage der beiden Hälften zu in sich geschlossenen Hohlkammem. Dabei dringt der Zapfen 8 der einen Hälfte der Abdeckrosette 1 in das Fixierloch 7 der anderen Hälfte ein, und umgekehrt dringt der Zapfen 8 der anderen Hälfte in sein Fixierloch 7 der ersten Hälfte ein. Zapfen 8 und Fixierloch 7 weisen als Passung einen festen Haftsitz auf, der noch verstärkt wird durch eine Unterdruckbildung im in sich geschlossenen Fixierloches 7 bei versuchtem Herausziehen des Zapfens 8. Es ist auch denkbar und liegt im Rahmen der Erfindung, in den beiden Hälften der Abdeckrosette 1 einzig nur Fixierlöcher 7 vorzusehen und die Zapfen 8 als getrennte Teile auszubilden, die dann separat montiert werden. Die Abdeck - Rosette 1 hat einen ringförmigen, äußeren Auflagerand 9 mit einer Auflageebene 10. Gegenüber dieser ist eine innere Bodenfläche 11 der Abdeck - Rosette 1 etwa 5 mm zurückgesetzt. Dadurch ist die Größe einer Auflage der Abdeck - Rosette 1 bis auf den Auflagerand 9 verringert, und auf einer Wand - oder Bodenfläche wird ein Freiraum gebildet, der von der Rosette 1 übergriffen wird zwecks sauberer Auflage der Rosette 1. Dadurch sind solche Unebenheiten unschädlich.

Ein unterer Teil 12 des Durchgangsloches 2 ist etwas vergrößert ausgebildet, um Winkeltoleranzen der durchzuführenden Leitung auszugleichen.
Die zwei Hälften der Abdeck - Rosette 1 sind im Spritzgussverfahren hergestellt. Sie sind genau gleich. Bei Bedarf können sie farbig ausgelegt werden, bevorzugt werden sie aber in Holzfarben oder In weiß gefertigt.
Die Außenwand 6 und die anderen Wände der Hohlkammern 4, 5 und 6 sind etwa 2 bis 3 mm stark. Außerdem ist der Kunststoff sehr schlagfest
Das hat zur Folge, dass die Abdeck - Rosette 1 äußerst stabil ist und dass ein fester und wackelfreier Sitz der Rosette 1 gewährleistet ist. Außerdem hat die Rosette 1 aufgrund ihres gediegenen Aufbaus ein komfortables, ästhetisches Aussehen.
In den Figuren 3 und 4 ist eine Abdeck - Rosette 13 dargestellt, die zwei Durchgangslöcher 14 und 15 für zwei Leitungen hat. Diese Abdeck-Rosette 13 weist fünf Hohlkammern 16, 17,18,19 u. 20 auf.
Im Übrigen ist sie weitgehend geradeso aufgebaut wie die Abdeckrosette 1. Je ein Zapfen 21 hält die zwei Hälften der Abdeck - Rosette 13 zusammen, indem er mit festem Haftsitz in ein entsprechendes Fixierloch 22 der jeweils anderen Hälfte eindringt. Eine Unterdruckbildung in dem jeweiligen Fixierloch 22 erschwert das Herausziehen der Zapfen 21.
Als abzudeckende Löcher in Wänden oder Fußböden kommen meist Löcher für Leitungen wie Wasserleitungen oder elektrische Leitungen in Frage. Es ist aber auch denkbar, Löcher abzudecken, die für Träger oder dergleichen bestimmt sind, die keinen runden Querschnitt haben. Auch in solchen Fällen kann die erfindungsgemäße Abdeck - Rosette verwendet werden, wenn das Durchgangsloch in einer dem Träger - Querschnitt entsprechenden Konfiguration ausgeführt wird. Bei einer Herstellung als Spritzgussteil bereitet das keine Schwierigkeiten.
Schließlich ist es auch möglich, die Abdeck - Rosette mit drei oder mehr Durchgangslöchem zu versehen, wenn drei oder mehr Leitungen mit Abdeckungen ausgerüstet werden sollen. Die Anzahl der Hohlkammem ist dann entsprechend größer. Das gilt gegebenenfalls auch für die Anzahl der Zapfen - Fixlerloch Verbindungen.

### Bezugszahlenliste

- 1: Abdeck - Rosette
- 2: Durchgangsloch
- 3: Hohlkammer
- 4: Hohlkammer
- 5: Hohlkammer
- 6: Außenwand
- 7: Fixierloch
- 8: Zapfen
- 9: Auflagerund
- 10: Auflageebene
- 11: Bodenfläche
- 12: unterer Teil
- 13: Abdeck - Rosette
- 14: Durchgangsloch
- 15: Durchgangsloch
- 16: Hohlkammer
- 17: Hohlkammer
- 18: Hohlkammer
- 19: Hohlkammer
- 20: Hohlkammer
- 21: Zapfen
- 22: Fixierloch

## Patentansprüche

1. Abdeck-Rosette für Durchgänge von Leitungen oder dergleichen, **dadurch gekennzeichnet, dass** die Abdeck-Rosette (1,13) als Hohlkörper mit mindestens einer Hohlkammer (4, 5 u. 16, 17, 18, 19, 20) ausgebildet ist.

2. Abdeck - Rosette nach Anspruch 1, **dadurch gekennzeichnet, dass** die mindestens eine Hohlkammer (4, 5 u. 16, 17, 18, 19, 20) in sich geschlossen ist.

3. Abdeck - Rosette nach Anspruch 1 oder 2, **dadurch gekennzeichnet, dass** die Abdeck - Rosette (1, 13) doppelwandig ausgebildet ist.

4. Abdeck - Rosette nach einem der Ansprüche 1-3, **dadurch gekennzeichnet, dass** die Abdeck- Rosette (1, 13) aus mindestens zwei Teilen besteht, die durch eine Loch-Zapfen-Verbindung (7, 8, 21, 23, 22, 24) aneinander gehalten werden.

5. Abdeck - Rosette nach Anspruch 4, **dadurch gekennzeichnet, dass** die zwei Teile der Abdeck-Rosette (1, 13) identisch sind.

6. Abdeck - Rosette nach Anspruch 4 oder 5, **dadurch gekennzeichnet, dass** jeweils ein Teil mit einem Zapfen (8, 21, 22) und einem Fixierloch (7, 23, 24) versehen ist.

7. Abdeck - Rosette nach Anspruch 4 oder 5, **dadurch gekennzeichnet, dass** die zwei Teile jeweils nur mit Fixierlöchern (7, 23, 24) versehen sind, in die separate Zapfen (8, 21, 22) einsteckbar sind.

8. Abdeck-Rosette nach einem der Ansprüche 1-7, **dadurch gekennzeichnet, dass** die Größe einer Auflage der Abdeck-Rosette (1, 13) bis auf einen äußeren Auflagerand (9) verringert ist, indem eine innere Bodenfläche (11) gegenüber einer Auflageebene (10) des Auflagerandes (9) zurückgesetzt ist.

9. Abdeck - Rosette nach einem der Ansprüche 1-8, **dadurch gekennzeichnet, dass** ein unterer Teil (12) mindestens eines Durchgangsloches (2, 14, 15) zwecks Ausgleich von Winkeltoleranzen im Durchmesser vergrößert ist.

10. Abdeck-Rosette nach einem der Ansprüche 4-9, **dadurch gekennzeichnet, dass** die zwei Hälften der Abdeck-Rosette (1, 13) im Spritzgussverfahren hergestellt und gegebenenfalls farbig ausgelegt sind.

11. Abdeck-Rosette nach einem der Ansprüche 1-10, **dadurch gekennzeichnet, dass** die Abdeck-Rosette (1) ein Durchgangsloch (2) für Leitungen oder dergleichen und drei Hohlkammern (3, 4 und 5) aufweist.

12. Abdeck-Rosette nach einem der Ansprüche 1-10, **dadurch gekennzeichnet, dass** die Abdeck-Rosette (13) zwei Durchgangslöcher (14 und 15) für Leitungen oder dergleichen und fünf Hohlkammern (16, 17, 18, 19 und 20) aufweist.
